# FASCICULE DE BREVET EUROPEEN

(11) **EP 2 914 883 B1**
(45) Date de publication et mention de la délivrance du brevet: **07.12.2016**
(21) Numéro de dépôt: 13789867.2
(22) Date de dépôt: 21.10.2013
(51) Int. Cl.: F16J 15/08

(54) **JOINT STATIQUE MÉTALLIQUE ANNULAIRE PERFORMANT A BAS COÛT POUR HAUTES PRESSIONS ET GRANDS DIAMÈTRES**
KOSTENGÜNSTIGE UND HOCHLEISTUNGSFÄHIGE RINGFÖRMIGE STATISCHE METALLDICHTUNG FÜR HOHE DRÜCKE UND GROSSE DURCHMESSER
LOW-COST HIGH-PERFORMANCE ANNULAR METALLIC STATIC SEAL FOR HIGH PRESSURES AND LARGE DIAMETERS

(30) Priorité: 31.10.2012 FR 1260401
(43) Date de publication de la demande: 09.09.2015
(73) Titulaire: Snecma, 75015 Paris (FR)
(72) Inventeur: PYRE, Alain, F-27950 Saint Just (FR)
(74) Mandataire: David, Alain
(86) Numéro de dépôt international: PCT/FR2013/052507
(87) Numéro de publication internationale: WO 2014/068218

(56) Documents cités:
- EP-A1- 2 071 216
- GB-A- 2 316 720

## Description

### Arrière-plan de l'invention

L'invention concerne un joint statique métallique de type annulaire creux destiné à assurer une étanchéité dans des conditions d'utilisation sévères, typiquement des températures très élevées ou très basses, des hautes pressions et de grands diamètres, comme dans les environnements aéronautiques et spatiaux.

L'appellation de joint statique résulte du fait qu'un tel joint est utilisé dans des configurations où il n'existe pas de pièce en mouvement en contact direct avec lui. Une étanchéité statique est alors assurée. L'inconvénient de ces joints est leur difficulté de fabrication car ils sont habituellement réalisés par usinage, opération qui s'avère longue et coûteuse.

C'est pourquoi la demanderesse a proposé avec la demande FR2800147 un joint statique métallique annulaire qui peut être réalisé simplement par emboutissage.

Toutefois, les joints de ce type bien qu'économiques à produire ne possèdent pas un profil suffisamment résistant pour supporter la conjonction des très fortes pressions et de grands diamètres dans des applications nécessitant de fortes performances en étanchéité (comme tous les autres joints actuellement utilisés en production sur les moteurs aéronautiques, ils ont tendance à plastifier de façon excessive, c'est-à-dire avec un impact préjudiciable aux performances du joint, en particulier en termes de restitution utile).

Par très forte pression, on entend des pressions de plusieurs centaines de bar (typiquement > 2.10⁷ Pascals), selon les dimensions et le matériau de substrat utilisés.

Par grands diamètres, on entend des diamètres supérieurs à 200mm voire à 1m.

Par application nécessitant de fortes performances en étanchéité, on entend :
- un taux de fuite faible (de l'ordre de 10⁸ Ncm³/s/mm de circonférence),
- une restitution utile importante (capacité du joint à suivre le mouvement de ses interfaces tout en restant étanche),
- une capacité à fonctionner sur une large plage de températures (pouvant aller du domaine cryotechnique, de l'ordre de 20 K, aux hautes températures, supérieures à 1000 K).

### Objet et résumé de l'invention

La présente invention a donc pour but principal un joint à bas coût réalisé par emboutissage palliant les inconvénients de l'art antérieur. (voir EP-A-2071216).

Ce but est atteint grâce à un joint statique métallique annulaire comportant une première portée annulaire et une seconde portée annulaire se faisant face, caractérisé en ce qu'il comporte en outre une paroi centrale annulaire joignant perpendiculairement lesdites première et seconde portées annulaires et solidarisée de façon étanche à chacune d'elles par une soudure annulaire, l'ensemble présentant ainsi une section en H couché.

Avec cette configuration, on peut obtenir un joint dont la partie centrale annulaire distincte des portées annuaires est beaucoup plus rigide et résistante, ce qui permet de dissocier les fonctions « étanchéité et « reprise de l'effet de fond » du joint et d'éviter tout risque de plastification excessive du joint, tel qu'évoquée dans l'art antérieur.

Avantageusement, chacune desdites première et seconde portées annulaires présente une forme ondulée comprenant de préférence un creux entouré de deux bosses dont l'une au moins est destinée à assurer un appui avec une surface en regard au niveau de laquelle l'étanchéité doit être assurée.

Avantageusement, ladite partie centrale annulaire présente une section en forme de U très ouvert radialement vers l'extérieur et ladite soudure annulaire est réalisée en continu sur 360°, de préférence sans apport de matière, entre une surface interne des première et seconde portées annulaires au niveau d'un flanc interne desdits creux et une surface interne de ladite paroi centrale annulaire sensiblement à un niveau proche de ses extrémités.

De préférence, lesdits flancs internes desdits creux des première et seconde portées annulaires et lesdites extrémités de ladite paroi centrale annulaire ont une inclinaison sensiblement identique.

L'invention concerne également le procédé de fabrication d'un tel joint statique métallique annulaire comprenant les étapes suivantes :
- réalisation de la partie centrale annulaire par formage d'une première tôle métallique d'épaisseur prédéterminée et soudure de ses extrémités pour en faire un anneau fermé,
- réalisation de chacune des première et seconde portées annulaire par emboutissage d'une seconde tôle métallique d'épaisseur prédéterminée, et
- soudage en continu à 360° desdites première et seconde portées annulaires sur ladite partie centrale annuaire.

De préférence, ladite étape de soudage est effectuée sans apport de matière entre une surface interne des première et seconde portées annulaires au niveau d'un flanc interne desdits creux et une surface interne de ladite paroi centrale annulaire sensiblement à un niveau proche de ses extrémités.

Avantageusement, lesdites première et seconde tôles métalliques ont des épaisseurs différentes.

L'invention trouve application dans les systèmes mécaniques à brides droites comme à liaisons rotulantes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue en coupe axiale d'un joint annulaire statique métallique selon l'invention ;
- la figure 2 est une vue en perspective du joint de la figure 1 ;
- la figure 3 illustre le comportement au serrage du joint de la figure 1 ;
- les figures 4 et 5 sont des vues en demi-coupe axiale montrant des systèmes mécaniques intégrant la figure 1 ; et
- la figure 6 montre les différentes charges (pression et réactions) s'exerçant sur le joint de la figure 1.

### Description détaillée d'un mode de réalisation

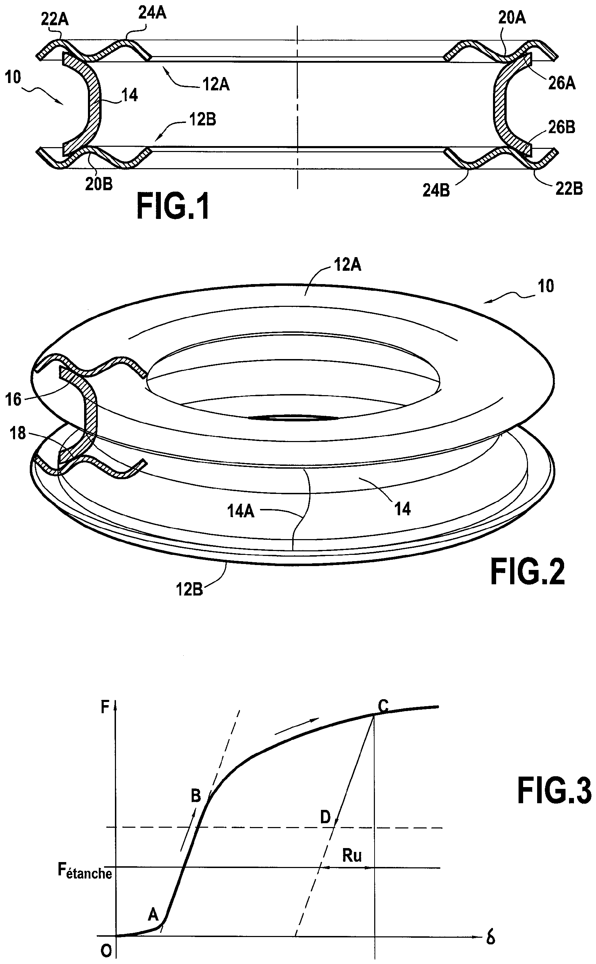

La figure 1 représente en coupe axiale un joint annulaire statique métallique conforme à l'invention et illustré en perspective à la figure 2. Ce joint 10 est constitué de trois parties distinctes, une partie annulaire ondulée supérieure 12A sensiblement horizontale formant une première portée, une partie annulaire ondulée inférieure 12B sensiblement horizontale formant une seconde portée et faisant face à la première partie et une partie centrale annulaire 14 sensiblement verticale formant une paroi de liaison élastique entre les première et seconde portées annulaires.

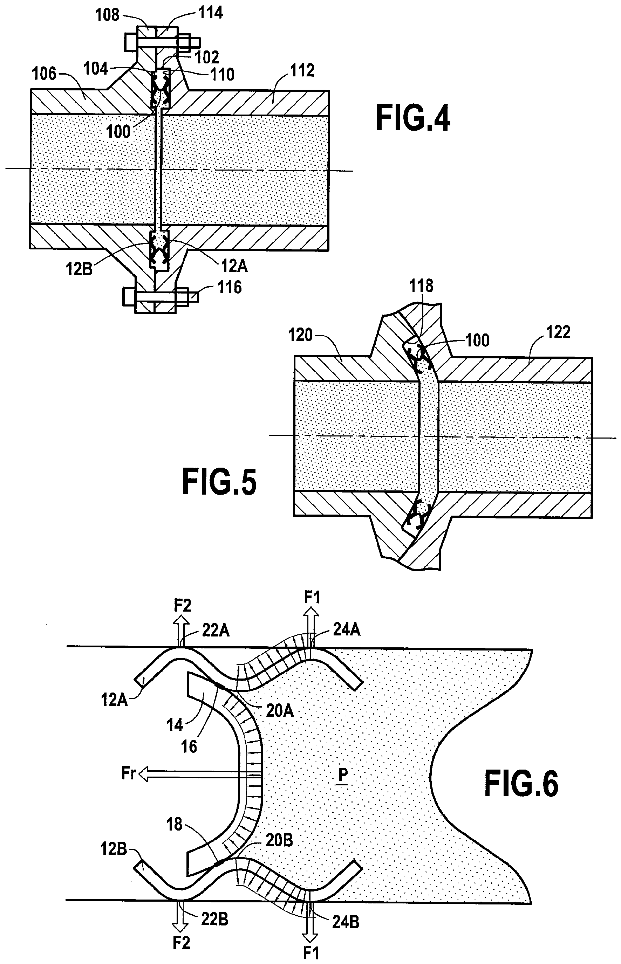

Les première et seconde portées annulaires 12A, 12B sont sensiblement identiques et sont destinées à s'appuyer sur les surfaces opposées (représentées figures 5 et 6) d'un système mécanique au niveau duquel l'étanchéité doit être assurée. Elles ont chacune une section de forme ondulée avec deux zones préférentielle d'appui ou bosses 22A, 24A ; 22B, 24B assurant le contact avec la surface opposée et séparées par une zone en dépression ou creux 20A, 20B. Les zones 24A et 24B sont préférentiellement destinées à assurer la fonction d'étanchéité. Les zones 22A et 22B ne sont pas obligatoirement destinées à assurer cette fonction d'étanchéité mais permettent de contrôler et limiter l'effort de serrage transitant dans les zones 24A et 24B.

Les portées sont obtenues, en une seule ou deux opérations, par découpe et emboutissage d'une tôle métallique (feuille de métal) obtenue préalablement par laminage afin d'avoir une planéité satisfaisante. L'épaisseur de cette tôle est déterminée de manière à conférer une raideur suffisante pour assurer l'étanchéité recherchée sous un effort de serrage donné tout en garantissant la restitution utile souhaitée.

La partie centrale annulaire 14 présente une section en forme de U très ouvert radialement vers l'extérieur (ou de coupelle) et est reliée aux première et seconde portées annulaires respectivement par deux soudures 16, 18. Les soudures sont réalisées en continu sur 360°, de préférence sans apport de matière, sur une largueur de contact éventuellement variable entre la surface interne des première et seconde portées annulaires au niveau de flancs internes 26A, 26B des creux 20A, 20B et la surface interne de la paroi centrale annulaire sensiblement à un niveau proche de ses extrémités. Cette partie centrale est obtenue par formage d'une tôle métallique puis par soudage de ses extrémités par une soudure 14A de manière à lui conférer sa forme fermée en anneau. L'épaisseur de cette tôle est déterminée de manière à conférer au joint les performances attendues notamment en termes d'effort d'écrasement et de tenue à la pression. En d'autres termes, la tôle 14 doit pouvoir reprendre, sans plastifier, l'effort de serrage au montage et l'effet de fond dû aux pressions élevées en fonctionnement.

On notera que les soudures 16, 18 et 14A, qui par exemple peuvent être des soudures électriques, ne nécessitent pas d'exigence particulièrement pénalisante car les trois zones de soudure sont disjointes des zones assurant l'étanchéité. En outre, le soudage est facilité par le fait qu'au niveau de la soudure 16, 18 les flancs internes des creux des première et seconde portées annulaires et les extrémités de la paroi centrale annulaire ont une inclinaison sensiblement identique.

Le substrat du joint est métallique et, par exemple, est réalisé en Inconel 718. Par contre, la surface externe des première et seconde portées annulaires en contact avec les surfaces au niveau desquelles l'étanchéité est assurée peut être recouverte en totalité d'un revêtement métallique ou non métallique, par exemple de quelques dizaines de microns. Il s'agit par exemple d'un revêtement d'argent obtenu par électrodéposition (applications cryotechniques, jusqu'à des températures moyennes de l'ordre de 800 K), de nickel adouci associé à un « flash » d'argent (applications de l'ambiante aux très hautes températures de l'ordre de 1200 K), ou encore de Téflon® ou Microtéflon® (applications cryotechniques, jusqu'à des températures modérées de l'ordre de 500K).

Le fonctionnement du joint est maintenant détaillé en regard de la figure 3 qui illustre le comportement du joint tout d'abord, lors de son serrage dans son logement (points 0-A-B-C) puis, lorsqu'il est délesté en fonctionnement (points C-D), suite à l'ouverture éventuelle de son logement due à la souplesse des liaisons et à la sévérité des chargements appliqués (sollicitations thermomécaniques). Cette figure qui représente l'effort de serrage (F) en fonction de l'ouverture du logement du joint (δ) permet aussi de comprendre la notion de restitution utile.

La zone 0-A de cette figure correspond à la mise à plat du joint lors de son serrage dans son logement, il s'agit de l'effort nécessaire à annuler le voile naturel (ondulation) des première et seconde portées annulaires 12A, 12B (ces ondulations résultent de la combinaison des déformées initiales de type « voile » des parties 12A, 12B et 14 ainsi que des déformées générées par les soudures 14A, 16 et 18). La zone A-B-C correspond à l'écrasement proprement dit du joint (c'est-à-dire à la déformation des parties 12A, 12B et 14).

En fonctionnement, le logement peut s'ouvrir et l'effort de serrage du joint diminuer de C vers D. Tant que l'effort de serrage dans les zones 24A et 24B destinées à assurer l'étanchéité reste supérieur à la limite d'étanchéité (F^{étanch}), l'étanchéité est assurée et le joint reste donc étanche. L'ouverture maximale du logement que le joint peut supporter avant de ne plus être étanche (autrement dit fuir), est représentée par Ru, c'est-à-dire sa restitution utile.

On notera que le caractère non linéaire de la courbe de la figure 3 traduit une plastification, en cours d'écrasement, du joint. Cette plastification concerne les seules portées 12A et 12B puisque, comme mentionné précédemment, la partie centrale 14 est volontairement dimensionnée pour ne pas plastifier, que ce soit lors du serrage du joint au montage ou sous l'effet de fond dû aux hautes pressions en fonctionnement.

Deux exemples de mises en oeuvre d'un joint conforme à l'invention dans un système mécanique quelconque sont illustrés aux figures 4 et 5.

Dans le premier cas de la figure 4, il s'agit d'une liaison à brides classiques dont les faces d'étanchéité sont perpendiculaires à l'axe de révolution de deux tronçons de conduite à relier et soumis à la pression d'un fluide de circulation. Le joint 100 est disposé dans un logement 102 dont une face est formée par un lamage 104 d'un premier tronçon de conduite 106 terminé par une bride 108 et une face opposée est formée par un lamage 110 d'un second tronçon de conduite 112 terminé par une bride 114. Les brides 108, 114 sont assemblées par des moyens de fixation tels que par exemple des boulons 116. Le joint est disposé dans le logement de telle sorte que les parties 12A, 12B soient en contact avec les lamages 104, 110 sans toutefois être en contact avec le fond du logement terminé en général par un congé.

La figure 5 illustre une liaison dite « rotulante » dans laquelle le joint 100 est incorporé dans un logement 118 dont les faces d'étanchéité des deux tronçons à relier 120, 122 ne sont plus perpendiculaires à l'axe de révolution de la conduite mais inclinées par rapport à cet axe.

La Figure 6 montre comment les charges dues à la pression P du fluide traversant le joint 100 s'appliquent sur ce joint. Elle montre en outre l'effet autoclave du joint. En effet, plus la pression du fluide (P) augmente, plus l'effort de serrage (F) qu'exercent les première et seconde portées d'étanchéité sur le logement 102 dans lequel ce joint est placé augmente également. Le fait que l'effet qu'exerce la première portée 12A sur le logement du joint se décompose en deux (F1 et F2) permet de limiter fortement la plastification de cette première portée lorsque la pression d'utilisation du joint devient très importante. Il s'agit là d'une différence importante par rapport aux joints notamment à lèvres de l'art antérieur pour lesquels les lèvres plastifient fortement sous une pression élevée, réduisant d'autant la restitution utile du joint. Enfin, la poussée radiale (FR) qu'exerce la pression sur le joint est reprise en quasi-totalité par la partie centrale annulaire 14 du joint, partie aussi rigide que nécessaire puisque réalisée par formage d'une plaque d'épaisseur plus importante que celle dans laquelle les première et seconde portées annulaires sont réalisées.

On notera que le positionnement des soudures 16 et 18 par rapport au profil du joint est tel qu'au montage et en fonctionnement, ces zones soudées se situent au fond du creux 20A, 20B créé par la forme ondulée du profil du joint dans une zone qui est comprimée de par le serrage du joint. Cette situation est favorable, puisque les microfissures inhérentes à la présence des soudures sont refermées dans de telles conditions d'utilisation et ne présentent donc pas de nocivité en termes de risque de propagation de fissure.

Les déformations résiduelles éventuelles du joint dues à ses soudures peuvent être considérées comme acceptables, moyennant des précautions classiques en soudage, telles qu'un bridage adéquat des parties à solidariser durant le soudage et le recours à un système efficace d'évacuation de la chaleur associée.

Dans l'éventualité où les première et seconde portées du joint se verraient sensiblement déformées suite aux opérations de soudage et malgré les précautions mentionnées, cette déformation serait caractérisée par une grande longueur d'onde. Ainsi, les ondulations de ces portées de joint (effet de voile) seraient facilement « gommées » lors de la première phase de serrage (phase 0-A de mise à plat de la figure 3) du joint dans son logement.

On notera également que lorsque la fonction d'étanchéité n'est assurée strictement que par les zones 24A et 24B, il convient de créer volontairement un passage (trou au travers de la portée ou rainure dans la face d'appui) mettant en communication l'extérieur du joint et la cavité piégée entre la face d'appui du joint et les zones 22A et 24A (idem de l'autre côté). En effet, de cette manière on peut s'assurer en vérifiant l'étanchéité avant fonctionnement en service que c'est bien la zone 24A qui assure correctement la fonction d'étanchéité visée et non la zone 22A. Cette situation présente surtout un intérêt si les brides sont suffisamment souples pour se déplacer en fonctionnement. Dans ce cas, en effet, le logement du joint s'ouvrira en fonctionnement et seule la zone intérieure 24A et 24B restera étanche, puisque les zones extérieures 22A et 22B verront leur effort local F2 chuter en deçà de la limite locale d'étanchéité, voire s'annuler, puisqu'elles sont situées à l'extrémité de portions des éléments 12A et 12B plus raides et non soumises à la pression (effet autoclave) comme les portions de 12A et 12B situées des côtés 24A et 24B. Toutefois, dans le cas où il est souhaitable que le joint fonctionne avec deux zones d'étanchéité de chaque côté (respectivement 22A, 22B et 24A, 24B), notamment si les brides sont suffisamment rigides pour ne pas se déplacer en fonctionnement, alors, le logement du joint ne s'ouvrira pas en fonctionnement et les deux zones destinées à assurer l'étanchéité resteront opérationnelles. Il s'agira d'une double barrière d'étanchéité, autrement dit d'une double sécurité, potentiellement intéressante par exemple pour des applications nucléaires.

## Revendications

1. Joint statique métallique annulaire (10) comportant une première portée annulaire (12A) et une seconde portée annulaire (12B) se faisant face, **caractérisé en ce qu'**il comporte en outre une partie centrale annulaire (14) joignant perpendiculairement lesdites première et seconde portées annulaires et solidarisée de façon étanche à chacune d'elles par une soudure annulaire, l'ensemble présentant ainsi une section en H couché.

2. Joint statique métallique annulaire selon la revendication 1, **caractérisé en ce que** chacune desdites première et seconde portées annulaires présente une forme ondulée.

3. Joint statique métallique annulaire selon la revendication 2, **caractérisé en ce que** ladite forme ondulée comprend un creux (20A, 20B) entouré de deux bosses (22A, 24A ; 22B, 24B) dont l'une au moins est destinée à assurer un appui avec une surface en regard au niveau de laquelle l'étanchéité doit être assurée.

4. Joint statique métallique annulaire selon la revendication 1, **caractérisé en ce que** ladite partie centrale annulaire présente une section en forme de U très ouvert radialement vers l'extérieur.

5. Joint statique métallique annulaire selon la revendication 4, **caractérisé en ce que** ladite soudure annulaire est réalisée en continu sur 360°, de préférence sans apport de matière, entre une surface interne des première et seconde portées annulaires au niveau d'un flanc interne (26A, 26B) desdits creux et une surface interne de ladite paroi centrale annulaire sensiblement à un niveau proche de ses extrémités.

6. Joint statique métallique annulaire selon la revendication 5, **caractérisé en ce que** lesdits flancs internes desdits creux des première et seconde portées annulaires et lesdites extrémités de ladite paroi centrale annulaire ont une inclinaison sensiblement identique.

7. Procédé de fabrication d'un joint statique métallique annulaire selon l'une quelconque des revendications 1 à 6, **caractérisé en ce qu'**il comprend les étapes suivantes :
- réalisation de la partie centrale annulaire (14) par formage d'une première tôle métallique d'épaisseur prédéterminée et soudage (14A) de ses extrémités pour en faire un anneau fermé,
- réalisation de chacune des première et seconde portées annulaire par emboutissage d'une seconde tôle métallique d'épaisseur prédéterminée, et
- soudage en continu à 360° (16, 18) desdites première et seconde portées annulaires sur ladite partie centrale annuaire.

8. Procédé selon la revendication 7, **caractérisé en ce que** ladite étape de soudage en continu à 360° est effectuée sans apport de matière entre une surface interne des première et seconde portées annulaires au niveau d'un flanc interne (26A, 26B) desdits creux et une surface interne de ladite paroi centrale annulaire sensiblement à un niveau proche de ses extrémités.

9. Procédé selon la revendication 7, **caractérisé en ce que** lesdites première et seconde tôles métalliques ont des épaisseurs différentes.

10. Système mécanique comportant un joint statique métallique annulaire selon l'une quelconque des revendications 1 à 6.

## Patentansprüche

1. Ringförmige statische Metalldichtung (10), umfassend eine erste ringförmige Auflagefläche (12A) und eine zweite ringförmige Auflagefläche (12B), welche einander gegenüberliegen, **dadurch gekennzeichnet, dass** sie ferner einen ringförmigen Mittelteil (14) umfasst, der die erste und die zweite ringförmige Auflagefläche senkrecht miteinander verbindet und mit jeder von ihnen durch eine ringförmige Schweißnaht auf dichte Weise fest verbunden ist, wodurch das Ganze einen Querschnitt in der Form eines liegenden H aufweist.

2. Ringförmige statische Metalldichtung nach Anspruch 1, **dadurch gekennzeichnet, dass** eine jede der ersten und zweiten ringförmigen Auflageflächen eine gewellte Form aufweist.

3. Ringförmige statische Metalldichtung nach Anspruch 2, **dadurch gekennzeichnet, dass** die gewellte Form eine Vertiefung (20A, 20B) umfasst, die von zwei Buckeln (22A, 24A; 22B, 24B) umgeben ist, von denen wenigstens einer dazu bestimmt ist, eine Anlage mit einer gegenüberliegenden Fläche, in deren Bereich die Dichtigkeit sichergestellt werden soll, sicherzustellen.

4. Ringförmige statische Metalldichtung nach Anspruch 1, **dadurch gekennzeichnet, dass** der ringförmige Mittelteil einen Querschnitt in der Form eines radial nach außen weit offenen U aufweist.

5. Ringförmige statische Metalldichtung nach Anspruch 4, **dadurch gekennzeichnet, dass** die ringförmige Schweißnaht zwischen einer Innenfläche der ersten und zweiten ringförmigen Auflageflächen im Bereich einer Innenflanke (26A, 26B) der Vertiefungen und einer Innenfläche der ringförmigen mittleren Wand im Wesentlichen in einem Bereich nahe ihrer Enden vorzugsweise ohne Materialzufuhr über 360° durchgehend hergestellt ist.

6. Ringförmige statische Metalldichtung nach Anspruch 5, **dadurch gekennzeichnet, dass** die Innenflanken der Vertiefungen der ersten und zweiten ringförmigen Auflageflächen und die Enden der ringförmigen mittleren Wand eine im Wesentlichen identische Neigung aufweisen.

7. Verfahren zur Herstellung einer ringförmigen statischen Metalldichtung nach einem der Ansprüche 1 bis 6, **dadurch gekennzeichnet, dass** es die folgenden Schritte umfasst:
- Ausbilden des ringförmigen Mittelteils (14) durch Formung eines ersten Metallblechs mit vorbestimmter Dicke und Verschweißen (14A) seiner Enden, um daraus einen geschlossenen Ring zu bilden,
- Ausbilden einer jeden der ersten und zweiten ringförmigen Auflageflächen durch Tiefziehen eines zweiten Metallblechs mit vorbestimmter Dicke und
- durchgehendes 360°-Verschweißen (16, 18) der ersten und zweiten ringförmigen Auflageflächen an dem ringförmigen Mittelteil.

8. Verfahren nach Anspruch 7, **dadurch gekennzeichnet, dass** der Schritt des durchgehenden 360°-Verschweißens ohne Materialzufuhr zwischen einer Innenfläche der ersten und zweiten ringförmigen Auflageflächen im Bereich einer Innenflanke (26A, 26B) der Vertiefungen und einer Innenfläche der ringförmigen mittleren Wand im Wesentlichen in einem Bereich nahe ihrer Enden durchgeführt wird.

9. Verfahren nach Anspruch 7, **dadurch gekennzeichnet, dass** das erste und das zweite Metallblech unterschiedliche Dicken aufweisen.

10. Mechanisches System, umfassend eine ringförmige statische Metalldichtung nach einem der Ansprüche 1 bis 6.

## Claims

1. An annular metal static seal (10) comprising a first annular bearing plate (12A) and a second annular bearing plate (12B) facing each other, the seal being **characterized in that** it further includes an annular central portion (14) perpendicularly connecting together said first and second annular bearing plates and secured in sealed manner to each of them via a respective annular weld, the assembly thus presenting a section in the shape of the letter H on its side.

2. An annular metal static seal according to claim 1, **characterized in that** each of said first and second annular bearing plates is of undulating shape.

3. An annular metal static seal according to claim 2, **characterized in that** said undulating shape comprises a recess (20A, 20B) between two bulges (22A, 24A; 22B, 24B), at least one of which is for pressing against a facing surface where sealing is to be provided.

4. An annular metal static seal according to claim 1, **characterized in that** said annular central portion presents a U-shaped section that is widely open in a radially outward direction.

5. An annular metal static seal according to claim 4, **characterized in that** said annular welds are made continuously over 360°, preferably without filler material, between inside surfaces of the first and second annular bearing plates on respective inside flanks (26A, 26B) of said recesses and an inside surface of said annular central portion substantially at positions close to its ends.

6. An annular metal static seal according to claim 5, **characterized in that** said inside flanks of said recesses of said first and second annular bearing plates and said ends of said annular central portion have slopes that are substantially identical.

7. A method of fabricating an annular metal static seal according to any one of claims 1 to 6, **characterized in that** it comprises the following steps:
making the annular central portion (14) by forming a first metal sheet of predetermined thickness and welding (14A) its ends together so as to make a closed ring;
• making each of the first and second annular bearing plates by stamping a second metal sheet of predetermined thickness; and
continuously welding (16, 18) said first and second annular bearing plates over 360° to said annular central portion.

8. A method according to claim 7, **characterized in that** said step of continuously welding over 360° is performed without adding filler material between the inside surfaces of the first and second annular bearing plates on inside flanks (26A, 26B) of said recesses and an inside surface of said annular central portion at positions close to its ends.

9. A method according to claim 7, **characterized in that** said first and second metal sheets are of different thicknesses.

10. A mechanical system including an annular metal static seal according to any one of claims 1 to 6.
